# EUROPEAN PATENT SPECIFICATION

(11) **EP 4 310 381 B1**
(45) Date of publication and mention of the grant of the patent: **27.05.2026**
(21) Application number: 22466004.3
(22) Date of filing: 21.07.2023
(51) Int. Cl.: F16L 59/12, F16L 5/14

(54) **HERMETIC PIPE PENETRATION**
HERMETISCHE ROHRDURCHFÜHRUNG
PÉNÉTRATION DE TUYAU HERMÉTIQUE

(30) Priority: 22.07.2022 CZ 20220316
(43) Date of publication of application: 24.01.2024
(73) Proprietor: Skoda JS a.s., 316 00 Plzen (CZ)
(72) Inventor: Pulc, Martin, 316 00 Plzen (CZ)
(74) Representative: Pavlica, Tomas

(56) References cited:
- CZ-U1- 17 234
- FR-A- 1 458 816
- US-A- 3 536 584
- US-A- 4 627 647

## Description

### Field of invention

The invention deals with a hermetic pipe penetration used mainly to ensure media transfer by means of a pipe routed through at least one wall separating building spaces having different demands for environmental parameters, wherein said building spaces have to be hermetically separated one from the other.

### Background of invention

The main requirements for the hermetic pipe penetration are as follows:
- To ensure hermeticity between two separated building spaces when allowing a pipeline to run through a wall separating a hermetic compartment and a non-hermetic compartment of a building;
- To make use of it as a firm support for the pipe within the pipeline or a fixed point transmitting any forces and moments between the pipeline and the building;
- Particularly in nuclear power plants, to reduce ionizing radiation transfer from the hermetic to the non-hermetic compartment and to decrease staff exposure in the latter;
- To function for separation of fire compartments (as a fire-resistant structure).

Hermetic pipe penetrations comprises of the following two basic parts:
1) An embeddable part built firmly in the structure. The embeddable part comprises a protective tube inserted into and passing through a hole in the wall of the building and of flanges forming an annulus and welded together on both sides of the wall so that this embeddable part of the hermetic penetration is firmly connected to the building. For example, in case of hermetic pipe penetrations used in nuclear power plants, the embeddable part is cast in the concrete structure to ensure perfect bonding of the embeddable part with said structure and hermetical sealing.
2) A flow part which comprises a flow pipe and a head, the flow pipe being attached to the head described below by means of a circumferential strength weld. This weld, however, is not inaccessible at all after an installation of the whole flow part in the embeddable part, thus being uncontrollable. Furthermore, penetrations with media temperatures exceeding 80 °C are completed with insulation of the flow part, and penetrations with media temperatures exceeding 150 °C, in addition to the insulation, are cooled actively with low-pressure cooling air (to reduce the temperature of the adjacent concrete under 70 °C).

The head of the flow part mentioned in item 2) above is a relatively robust component which creates a high thermal stress in case of medium temperature variation in a place of transition between its cylindrical part and a disk-shaped part, whereby reducing the service life thereof considerably in the place of stress concentration. The flow part is connected to the pipeline with the medium the transport of which is to be provided between the above-mentioned hermetically separated building spaces.

The assembly welds, on which reliable hermetic separation of spaces depends, are usually complemented with a pressure chamber to monitor the specified hermeticity of the joint. As this chamber is mostly located in a hermetically separated section, for example in nuclear power plants, its hermeticity cannot be monitored during operation as it is inaccessible for inspection.

The above-mentioned hermetic pipe penetration is described, for instance, by utility model CZ 17234 U1. Such hermetic pipe penetration shows all the drawbacks mentioned above.

### Subject of invention

The above-mentioned disadvantages are eliminated by a hermetic pipe penetration according to claim 1, for passing pipelines through at least one building wall. This hermetic pipe penetration eliminates the existence of the uncontrollable pressure-stressed weld and makes it possible to perform leak-tightness monitoring in a place of passing through the wall while simultaneously ensuring the required rigidity/stiffness/ of the joint with the sufficient load-bearing capacity of the connection of the passing pipeline and of the building structure and while simultaneously providing other unthought-of advantages. For the purposes of this application, the term "hermetic pipe penetration" means a penetration through a building compartment wall, including penetration through a steel wall, and this hermetic pipe penetration allows sufficiently firm interconnection of the media pipeline with the said wall and also hermetic separation of spaces of building compartments from one and the other side of a wall through which said hermetic pipe penetration passes. Preferably this hermetic pipe penetration also ensures sufficient fire resistance and protection against ionizing radiation penetration. The hermetic pipe penetration according to this invention can be preferably used in reconstructions of existing hermetic pipe penetrations of an original design with a full use of existing built-in parts, or it is advantageous to use this new solution for newly designed penetrations both in brand new projects and where a new pipe penetration has to be built in an existing building structure.

According to the invention, a hermetic pipe penetration is provided with a collar designed to connect the embeddable part with the flow part without a need of using a circumferential pressure-stressed weld of the flow pipe part of the hermetic pipe penetration and, moreover, to reduce the thermal stress of this joint.

The advantages offered by the hermetic pipe penetration according to this invention are as follows:
- The welds used to connect the embeddable part of the hermetic pipe penetration with the flow part are not loaded by a weight of the medium in the pipeline, which results in a considerable increase of operation safety and lifetime of the hermetic pipe penetration.
- The inspection chambers allow monitoring the welds for leak-tightness.
- Possibility to design a hermetic penetration with various rigidity of the connection of the embeddable and flow parts as required.
- Compensation abilities for different thermal expansions of the flow part and of the embeddable part even for high temperature differences in both parts.
- Heat transfer reducing abilities between the flow part and the embeddable part by means of the shaped collar.
- Applicability for different sizes of holes in the wall in which the hermetic pipe penetration is to be installed as well, as well as for different diameters of the flow part passing through.
- Easy designing of a hermetic penetration for any size of already existing embeddable part of the hermetic pipe penetration built in the structure where the hermetic pipe penetration according to this invention is to be constructed.
- It can be used for any medium to flow through.
- It is suitable for all the materials required for pressure media transport (i.e., predominantly for austenitic and ferritic steels).
- Substantial decrease of costs because of optimal shaped collar design and because of possibility of using a commonly used pipe for the flow part of the penetration.
- The modular solution will make it possible very easily to adapt the lengths of the individual parts to the installation needs on site.
- Ability to transfer high forces and moments.
- Having a lower rigidity it will decrease a stress of the piping connected up- and downstream the hermetic pipe penetration.

According to the invention, therefore, a hermetic pipe penetration is presented which comprises at least:
a) An embeddable part comprising an outer tube, the outer tube to be built in the structure wall separating building spaces to be separated hermetically, and flanges, the flanges being arranged on both sides of this wall, with this embeddable part being designed for structural connection with the wall separating the above-mentioned spaces separated hermetically from each other;
b) Particularly it is preferred if the flow part consists of a pipe arranged in the embeddable part, substantially in a coaxial arrangement therein, said flow part being designed to be connected on both sides of the hermetic pipe penetration to a pipeline system transporting a medium between the mentioned two hermetically separated compartments;
c) A shaped collar having a rigidity-creating part and a connecting part, the shaped collar mechanically connecting the embeddable part of the hermetic pipe penetration with its flow part, providing preferably a possibility to monitor periodically or continually the leak-tightness of the connecting joints attaching the connecting part of this shaped collar to the flow part of the hermetic pipe penetration, wherein the rigidity-creating part of this shaped collar is designed to provide the required rigidity of the connection of the flow part with the embeddable part as desired for the continuing pipeline. Such joints are most often executed as welds but, in some embodiments, the joint can also be performed as a gland, particularly if there is no requirement for transfer of the effects of forces and/or moments. Connection rigidity of the pipeline can be influenced by modifying the rigidity-creating part from an embodiment for media having low temperatures between 0 and 60 °C to that for high temperatures, i.e., media temperatures even above 150 °C. The rigidity-creating part of the embodiment for high media temperatures considerably reduces a thermal stress occurring in the hermetic pipe penetration and, moreover, limits heat transfer to the building structure. Thus, in addition to the impact on the rigidity of the connection between the flow and embeddable parts of the hermetic pipe penetration, the design of the rigidity-creating part of the shaped collar also affects the quantity of heat transferred between the flow and embeddable parts of the hermetic pipe penetration. In principle, the more complex the shape of the stiffening part of the shaped collar, i.e., the more waves it contains, and also the smaller the thickness of the individual sections of the stiffening part, the less heat the shaped collar transfers from the flow part to the embedded part and the lower the thermal stress in this part is. However, at the same time s connection will have a lower flexural rigidity; thus, less moment reaction from the connected pipeline will be transmitted at the point of the hermetic pipe penetration and, therefore, the stresses on the pipeline in the place of connection to the hermetic pipe penetration will be lower, which can be highly advantageous in some cases. Preferably the rigidity-creating part of the shaped collar of the hermetic pipe penetration can be shaped according to the requirements by an appropriate calculation program based on calculations using the finite element method entering specifications of stressing forces and moments from the connected pipeline. The connecting part of the shaped collar is designed for being installed on the pipe of the flow part of the hermetic pipe penetration and is fitted with a foot making it possible to attach the connecting part of the shaped collar to the pipe of the flow part by means of two joints preferably executed by means of welds, which will provide the required leak-tightness of the connecting joints of the shaped collar with the flow part of the hermetic pipe penetration, with a circumferential inspection chamber being between them in the foot, more advantageously further provided with an outlet located outside these connecting joints. As already mentioned above, the connecting joints are particularly preferably made by means of welds but can also be performed by means of glands, etc. However, the execution of the joints by welding provides the advantage of such joints allowing the transfer of force and moment effects. A circumferential inspection chamber is arranged in the foot between the connecting joints to allow inspection of the joints for a leak-tightness. The above-mentioned outlet of the circumferential inspection chamber is designed to signal any loss of leak-tightness. This embodiment is particularly advantageous where it is necessary to monitor the joint of the shaped collar with the flow part continuously to ensure reliable hermetic separation of the spaces located on both sides of the wall through which the hermetic pipe penetration passes. Any loss of leak-tightness of the joints being monitored can be indicated during operation, for instance, by pressure increase in the chamber or, on the other hand, after connecting an inspection apparatus, loss of leak-tightness is signalled by a pressure drop in the chamber, etc.

It would be obvious to a person skilled in the art, that the coaxial arrangement of the flow part in the embeddable part of the hermetic pipe penetration does not need to be concentric, even though such arrangement is particularly preferred, especially to provide an insulation of the flow part against the embeddable one.

The hermetic pipe penetration according to this invention provides a solution of a penetration of a pipe supplying a medium through at least one wall of a building while meeting all the requirements mentioned above but with increased reliability, providing a possibility to change the rigidity of connection to the building structure and allowing a possibility of periodical or continual monitoring of connecting joints arranged between the hermetic and non-hermetic parts for hermeticity of the penetration, even without accessing the hermetic part, thus increasing further the equipment operation reliability.

According to its particularly advantageous embodiment, the hermetic pipe penetration according to this invention provides a structural solution which, by decreasing the thermal stress, increases lifetime particularly in pipelines with high temperatures, in particular those over 150 °C. A usual length of the embeddable part of the state of art hermetic pipe penetrations ranges approximately from 0.2 m to 2.5 m, but this invention allows to set up hermetic pipe penetration of a length of even more than 5 m, allowing it to run through two walls.

According to another aspect of this invention, a shaped collar is provided for the hermetic pipe penetration having the embeddable and the flow parts. Such shaped collar is designed for connection of the embeddable part of the hermetic pipe penetration with its flow part and includes a rigidity-creating part and a connecting part. The rigidity-creating part of this shaped collar is designed to provide the required rigidity of connection of the flow part with the embeddable part as desirable for the connected pipeline. Connection rigidity can be influenced by modifying the rigidity-creating part from embodiment for media with low temperatures between 0 and 60 °C to media for high temperatures, i.e., even above 150 °C. The rigidity-creating part embodiment for high temperature media with considerably reduces the thermal stress occurring in the hermetic pipe penetration and, moreover, limits heat transfer to the building structure. In addition to the impact on the rigidity of interconnection between the flow and embeddable parts of the hermetic pipe penetration, therefore, the design of the rigidity-creating part of the shaped collar also affects the quantity of heat transferred between them. In principle, the more complex the shape of the rigidity-creating part of the shaped collar, the more waves it contains, for instance at least two or even more, the less heat the shaped collar transfers from the flow part to the embeddable part. It is also possible to reduce the quantity of transferred heat by lowering the thickness of the individual sections of the rigidity-creating part or to combine both features, i.e., the number of waves and the choice of thickness of the shaped collar sections. At the same time, however, this connection will have a lower flexural rigidity; thus, less moment reaction from the connected pipe will be transmitted at the point of the penetration and, therefore, the stresses on the pipe in the place of connection to the penetration will be lower, which can be highly advantageous in some cases. The specific shape of the rigidity-creating part of the shaped collar of the hermetic pipe penetration can preferably be designed in dependence on requirements in a suitable calculation program based on calculation using the finite element method with the specification of the stressing forces and moments from the connected pipeline. The connecting part of the shaped collar is designed for being installed on the pipe of the flow part of the hermetic pipe penetration and is fitted with a foot making it possible to attach the connecting part of the shaped collar to the pipe of the flow part by means of two connecting joints, with a circumferential inspection chamber being arranged between them in the foot, the inspection chamber being advantageously provided with an outlet. Particularly for welded joints this outlet is output outside such joints. This circumferential inspection chamber is arranged between the two connecting joints to allow to inspect these joints for a leak-tightness. The above-mentioned outlet of the circumferential inspection chamber is designed to signal any loss of leak-tightness. This embodiment is particularly preferred where it is necessary to monitor the connection of the shaped collar with the flow part continuously to ensure reliable hermetic separation of the spaces located on both sides of the wall through which the hermetic pipe penetration passes. Any loss of leak-tightness of the monitored connecting joints can be indicated during operation, for instance, by pressure increase in the chamber or, on the other hand, after connecting an inspection apparatus, loss of leak-tightness is signalled by a pressure drop in the circumferential inspection chamber. It is particularly preferred to have the rigidity-creating part substantially perpendicular to the foot of the connecting part of the shaped collar. It is also particularly preferred to arrange the rigidity-creating part symmetrically above the circumferential inspection chamber to allow for optimum compensation of any thermal stresses. This is particularly advantageous for high temperature differences between the flow and embeddable parts.

Thanks to the above-described embodiment of the hermetic pipe penetration according to this invention, its properties can be designed to meet the needs of the connected pipelines. As already mentioned above in paragraph c), connection of the shaped collar between the flow part and the embeddable part in the structure can be influenced to a considerable extent by the shape and thickness of the individual parts of the shaped collar. The thickness of the shaped collar, in all its parts, is preferably selected from 0.5 to 2 times the thickness of the connected flow pipe forming the flow part, and particularly preferably from 0.5 to 1.5 times the thickness of the connected flow pipe forming the flow part. Furthermore, the smaller the thickness of the individual parts of the shaped collar, and in particular of the rigidity-creating part thereof, the lower the rigidity of the connection of the flow part of the hermetic pipe penetration to the embeddable part. Similarly, the rigidity of the connection is influenced by the length of the individual sections, where their shorter length increases the rigidity, while their greater length decreases it.

The hermetic pipe penetration also provides particularly preferably, protection against the penetration of ionizing radiation by, for example, being suitably coated with cast iron grit, serpentinite, lead or any other material which prevents the penetration of ionizing radiation.

### Brief description of drawings

The figures used in the description of the example embodiments are described briefly below in order to illustrate the subject of the invention more clearly. It is understood that the figures described illustrate only some, but not all, embodiments of the presented invention and that a skilled person can create additional example embodiments without any creative effort. The figures present the following:
- Fig. 1a: presents a longitudinal axonometric sectional view of the hermetic pipe penetration according to the first embodiment of the invention;
- Fig. 1b: presents the design of the cooling internal means shown in Fig.1a;
- Fig. 2: shows a detailed sectional view of the hermetic pipe penetration according to Fig. 1a;
- Fig. 3: shows a detailed sectional view of the hermetic pipe penetration according to another embodiment;
- Fig. 4: shows a detailed sectional view of the hermetic pipe penetration according to another possible embodiment with a bellows-shaped collar;
- Fig. 5: presents a hermetic pipe penetration in an embodiment allowing connection through two walls.

### Invention embodiment examples

To facilitate the understanding of the hermetic pipe penetration according to this invention, examples of its possible embodiment are described below. Although the present invention is described below by means of particular embodiments enabling to perceive the subject of the invention, it is not intended to restrict the extent of the invention in any way to the embodiments described herein. The subject of invention.is limited only by claims attached below.

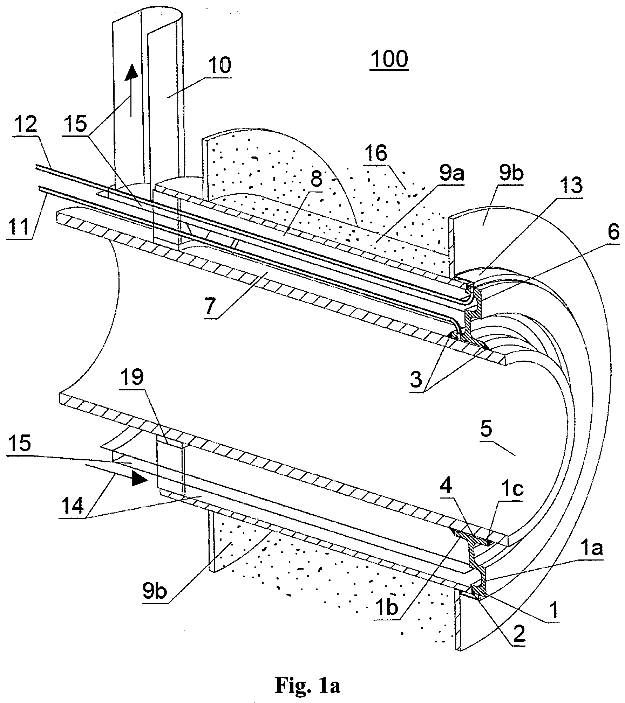

The embodiments of the hermetic pipe penetration according to this invention shown in Fig. 1a to 5 are schematics only and are not intended to limit the invention. For illustrative reasons, the embodiments shown in the figures may provide the sizes of some elements magnified or out of scale. The dimensions and the relative dimensions do not correspond to the actual sizes. Further, the terms "first", "second" and similar as they appear in the description and in the claims are used to distinguish between similar elements and are not necessarily meant to describe succession or temporality, space or superiority of one element over another, unless stated expressly or unless it follows from their function. Similarly, terms related to an orientation in space, such "above" or "below" and the like are used here for ease of description of the mutual relationship of one element to other element(s). It is to be understood the terms so used are interchangeable under certain circumstances, and that an embodiment of the invention or its parts, as described herein, is/are capable of operation in orientations different from those shown or mentioned herein. Thus, expressions describing a relative orientation of individual parts may in fact include other orientation than described or mentioned herein or shown in the drawings. For example, when turning the invention or its respective part(s) by 180°, elements described as "above" with respect to other elements will thus be oriented "below" the other elements. The invention or its parts can be oriented differently, e.g., rotated by certain degree, etc. Thus, the terms related to an orientation in the space should be interpreted adequately in such case. Moreover, although some embodiments of the invention described herein contain only some elements, but not the other ones, which, on the other hand, are contained in other embodiments, combinations of the elements from various embodiments are possible as falling within the scope of the invention, forming other embodiments than those described herein, which would be fully understandable to persons skilled in the art.

A person skilled in the art will also understand that other embodiments of the hermetic pipe penetration according to this invention are possible in addition to those provided in the examples and drawings. The examples of the embodiment, therefore, only represent certain possible embodiments, and they should not be used to restrict the invention to the embodiments shown. The word comprise should be interpreted as not limiting to the parts mentioned therein, other parts may be added. A person skilled in the art may also add other parts to the herein mentioned ones. However, the presence of the added parts will not change the substance of the presented invention. All these embodiments still fall within the extent of this invention, which is only restricted by the wording of the patent claims. Furthermore, it should be noted that the same elements of the hermetic pipe penetration shown in the various embodiments in the figures attached are identified with the same reference numerals.

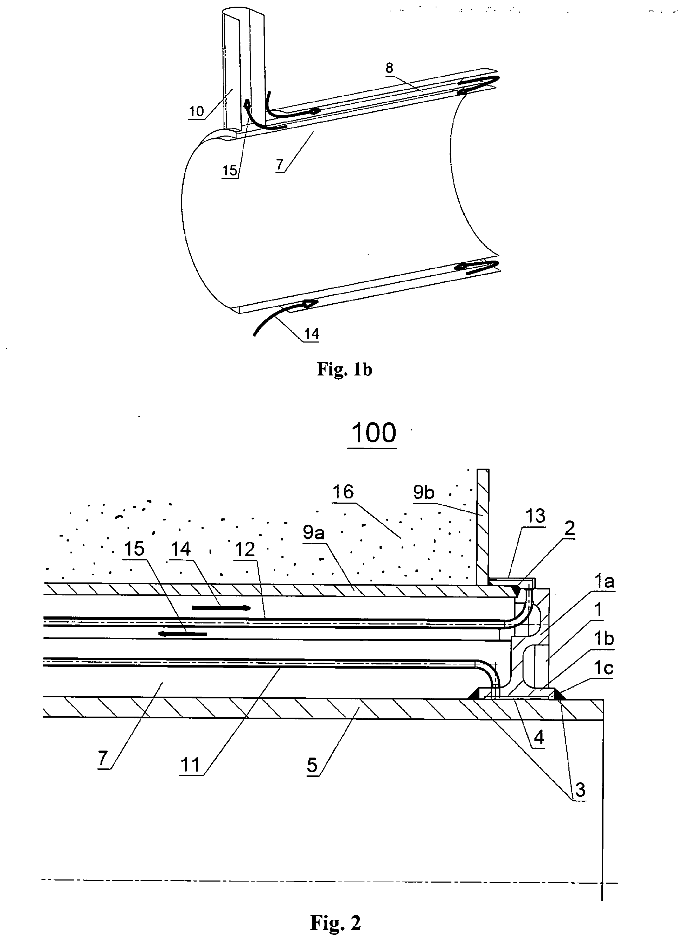

Fig. 1a and 2 show the hermetic pipe penetration according to one embodiment of this invention in a sectional view, being designed for a pressure system containing a medium having higher temperature, i.e., higher than 60°C, this hermetic pipe penetration allowing to pass the pressure medium through a wall separating two building spaces to be hermetically separated.

In Fig.1a, the hermetic pipe penetration 100 is arranged in a wall 16, wherein a requirement is to provide a hermetic separation of the two spaces arranged on both sides of this wall 16. The hermetic pipe penetration 100 shown in Fig.1a contains an embeddable part 9 being embedded in the building structure, a flow part 5 and a shaped collar 1. The embeddable part 9 comprises a protective tube 9a provided to pass through the wall 16 of the building and of two flanges 9b located on the sides of this wall 16. The embeddable part 9 is firmly connected with the wall 16 of the building particularly preferably being cast in concrete so as be sealed hermetically in the wall 16. The flow part 5 is represented by a pipe arranged inside the protective tube 9a.

The hermetic pipe penetration 100 is provided with a shaped collar 1 having a rigidity-creating part 1a and a connecting part 1b. In this example of the embodiment, the rigidity-creating part 1a is designed to form a numeral "2" to provide medium rigidity of the shaped collar 1, allowing to increase flexibility of the joint of the pipeline running through the wall, in comparison to state of art hermetic pipe penetrations, having a thermal insulation, passive cooling and having pulse tubes integrated allowing to monitor the connecting joints of the hermetic pipe penetration for leak-tightness. In this embodiment the connecting joints are represented by welds. The embeddable part 9 of the hermetic pipe penetration is provided with an insulation and passive cooling. The connecting part 1b is provided with a foot 1c, the foot 1c is designed so, that during an installation of the shaped collar 1 on the flow part 5 said foot 1c is positioned virtually in parallel with the flow part 5 and is adapted for a connection to this flow part 5 by two joints 3. In the embodiment shown in Fig. 1, this hermetic pipe penetration 100 is further provided with thermal insulation, passive cooling and with pulse tubes integrated to allow to monitor the connecting welded joints for leak-tightness and with insulation and passive cooling of the embeddable part 9 of the hermetic pipe penetration. The shaped collar 1 is particularly preferably located on the side of the wall in the space to be separated hermetically from the building space on the other side of the structure, for instance due to radioactive radiation present in the first space.

In the embodiment of the hermetic pipe penetration 100 shown in Fig. 1a, the shaped collar 1 is connected by the foot 1c of the connecting part 1b to the pipe 5 of the flow part by means of two connecting joints 3. As already mentioned above, in this example of the embodiment, the connecting joints 3 are welds. The rigidity-creating part 1a of the shaped collar 1 has two folds, each having approx. 90°, the folds are spaced from each other, substantially forming a numeral "2". The rigid-forming part 1a having its thickness corresponding approximately to 0.8 times the thickness of the connecting piping 5, which provides intentionally lower rigidity created by the shaped collar 1 in comparison with the hermetic penetrations according to the state of the art. The connecting part of this hermetic pipe penetration is fitted with an outlet to which a pulse tube 11 is connected. The hermetic pipe penetration 100 is further provided with a circumferential inspection chamber 13 constructed above the joint connecting the shaped collar 1 to the embeddable part 9 of the hermetic pipe penetration, and this circumferential inspection chamber 13 is fitted with an outlet to which a pulse tube 12 is connected. The pulse tubes 11 and 12 make it possible to monitor the joint for hermeticity outside the hermetic zone. As already mentioned above, the joint 3 is particularly preferably constructed as a weld. The hermetic pipe penetration 100 shown in Fig. 1a is further provided with a thermal insulation 7 and with a passive cooling integrated in the embeddable part 9 provided with a draught booster 10. The passive cooling system in this embodiment of the invention is carried out by means of cooling internal means 8, said cooling internal means 8 provided with an air inlet 14 to the internal part of cooling air distributor within the cooling internal means 8, and with an outlet 15 of the heated air, and by a draught booster 10. Fig. 1b shows a sectional view of the cooling internal means 8, which depicts its design and shows arrows to indicate the air flow direction from the air inlet 14 through the cooling internal means 8 all the way to the outlet 15 of heated air from the cooling internal means 8. The cooling internal means 8 are provided with the draught booster 10 to increase a cooling air flow-rate through the cooling internal means 8.

Fig. 2 shows a sectional view of the hermetic pipe penetration from Fig. 1a with a detail of the shaped collar 1. This figure presents all the parts in connection with the description of Fig. 1 identified with the same reference numerals, so they will not be described again. Fig. 2 predominantly serves for better understanding of the individual parts of the hermetic pipe penetration 100 and their arrangement. The purpose of Fig. 2 particularly is to make easier to understand the individual parts of the hermetic pipe penetration 100 and their mutual arrangement. Nevertheless, from Fig.2 should be especially noted the connection of the foot 1c of the connecting part 1b to the flow part 5 by means of the two connecting joints 3 and an arrangement of the circumferentially arranged inspection chamber 4 in the bottom of the foot 1c, located adjacent to the flow part 5. An outlet from the inspection chamber 4 is connected to a pulse tube 11 and routed out of the hermetic pipe penetration 100 to allow to perform an appropriate monitoring of the connecting joints 3 for their leak-tightness. This drawing also shows clearly a inspection chamber 13 circumferentially arranged above the joint 2 connecting the rigidity-creating part 1a to the protective tube 9a of the embeddable part 9. In its part intended for connection with the protective tube 9a of the flow part 9, the rigidity-creating part 1a is adapted in a suitable manner for a connection with the joint 2, being a weld here. The outlet from the inspection chamber 13 is connected to a pulse tube 12 and routed out of the hermetic pipe penetration 100 to allow to perform the appropriate monitoring of the joint 2 for its leak-tightness.

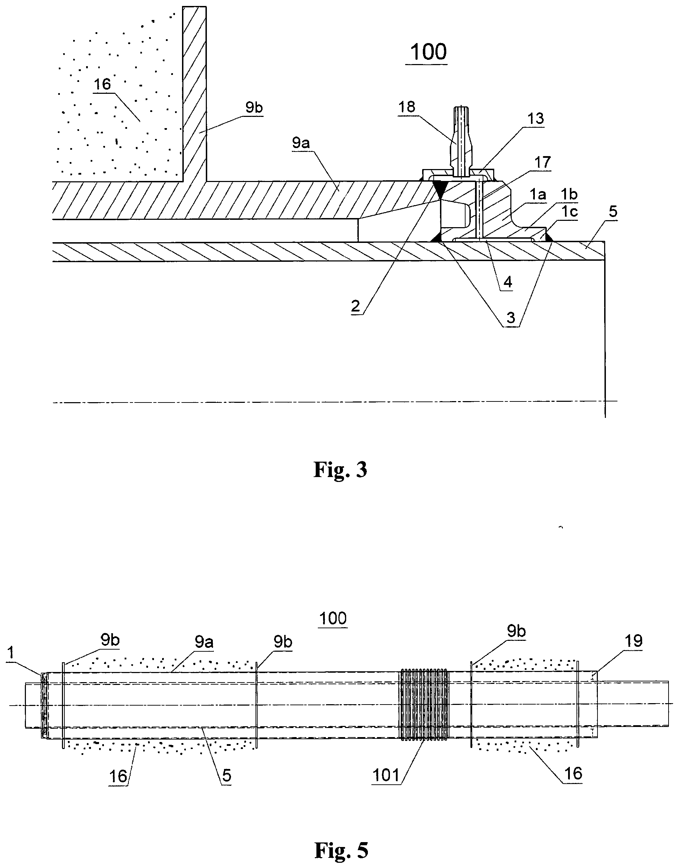

Fig. 3 shows the hermetic pipe penetration 100 according to another embodiment with the shaped collar 1 having a simpler shape for a low-temperature media where neither a lower rigidity of the connection, nor a decrease of thermal stress from different thermal expansions is required. This embodiment is particularly suitable for media with low temperatures ranging from 0 to 60 °C where the shaped collar 1 is not necessary to compensate for the different thermal expansion of the flow part 5 and of the embeddable part 9 and, at the same time, neither thermal insulation nor the cooling internal means 8 are required for the hermetic pipe penetration. This embodiment also provides high rigidity of connection of the flow pipe 5 with the embeddable part 9. The embodiment of the hermetic pipe penetration 100 shown in Fig. 3 has circumferential inspection chambers 4 and 13 interconnected, so that they are provided with a common outlet which is fitted with a pressurizing nozzle 18 to monitor all connecting joints for their leak-tightness. The connecting joints are particularly preferably made as welds connecting the shaped collar 1 with the flow part 5 and with the protective tube 9a of the embeddable part 9 of the hermetic pipe penetration 100.

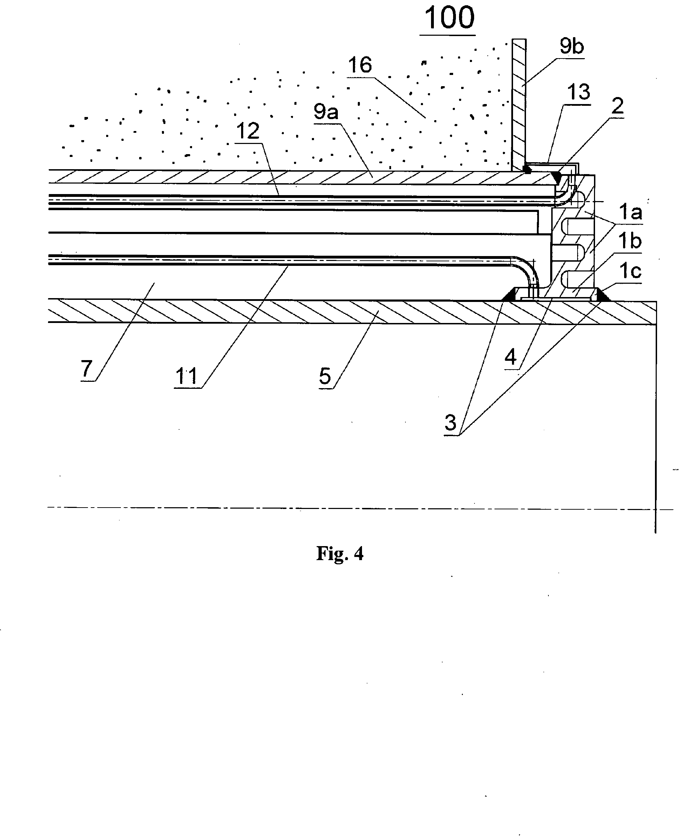

Fig. 4 shows a detail of a sectional view of a hermetic pipe penetration 100 according to another embodiment of the invention, having a shaped collar 1 with a rigidity-creating part 1a in a shape of a bellows. This hermetic pipe penetration 100 is particularly suitable for high-temperature media running through the flow part 5, wherein a low rigidity of the connection is required and the rigidity-creating part 1a of the shaped collar 1 in a form of the bellows reduces considerably the thermal stress from the thermal expansion difference between the flow part 5 and the embeddable part 9. The shaped collar 1, thanks to its rigidity-creating part 1a in this embodiment, allows for a compensation of a high thermal expansion difference of the flow part 5 and the embeddable part 9. The hermetic pipe penetration 100 comprises a cooling installation 8, it is advantageous when the cooling installation 8 is completed with a thermal insulation. As of all shown embodiments of the hermetic pipe penetration 100 or its shaped collar 1 shown, this embodiment also provides the lowest rigidity of a connection of the flow pipe 5 and of the embeddable part 9, whereby also reducing the mechanical stress in the pipe connected to the penetration. The hermetic pipe penetration 100 shown in Fig. 4 features low flexural rigidity of the shaped collar 1, especially in comparison with the embodiment shown in Fig. 3.

The hermetic pipe penetration 100 according to the invention is capable of ensuring transfer of force and moment effects from the connected pipeline to the building structure. The shaped collar 1 which connects the flow and structural parts of the hermetic pipe penetration is used to transfer forces and moments on the hermetic side of the hermetic pipe penetration, i.e., the side which has to be separated hermetically from the remaining part of the building. To allow a possible transfer of transverse forces, it is preferred to provide a sliding bearing 19 on the non-hermetic side of the hermetic pipe penetration 100. This slide bearing 19 together with the shaped collar 1 creates a force couple capturing the highest portion of bending moments from the connected pipeline.

Fig. 5 shows a long hermetic pipe penetration 100 reaching across two walls and comprising any shaped collar 1 from Figs. 2 to 4. To allow an expected relative motion between the two walls, the hermetic pipe penetration 100 is provided with a protective tube having preferably a bellows 101. Given its length, the hermetic pipe penetration is assumed to have to ensure also a transfer of transverse forces acting on it, which is why it is fitted on its side where its hermetic separation is not necessary, i.e., on the non-hermetic side, with a slide bearing 19 which together with the shaped collar 1 creates a force couple capturing the highest portion of bending moments from the flow part 5, respectively from the media pipeline connected to this flow part 5.

In connection with the above-shown examples of embodiment of the hermetic pipe penetration according to the invention, it is advisable to note that the specified temperature ranges of media are approximate and intended as examples, not limitations. A skilled person understands that, when designing the shape of the shaped collar, one has to take into account also the materials used in the individual parts of the hermetic pipe penetration and to calculate their specific design for the particular application by means of the finite element method with the specification of the forces and moments from the connected pipeline and other conditions. A skilled person also understands that, for instance, the joints providing hermeticity of the hermetic pipe penetration according to the invention, in addition to the above-mentioned pulse tubes 11 and 12 connected to the outlets of the respective inspection chambers 4 and 13, can be monitored for leak-tightness by means of appropriate sensors located directly on the outlets, possibly with such sensors being connected to the pulse tubes only used to connect the inspection chamber space with a sensor, particularly when the sensor cannot be located directly on the inspection chamber due to high temperature or radiation, for instance. Further, it should be noted that the hermetic pipe penetration can also be used in other applications than those mentioned above if such embodiment is suitable for them. Although Fig. 1a to 4 present basic possible shapes of the shaped collar of the hermetic pipe penetration according to the invention, both the shapes and the dimensioning of the individual parts of the shaped collar of the hermetic pipe penetration should always be designed for specific requirements. Moreover, the individual features of the parts of the hermetic pipe penetration described or depicted in connection with the individual embodiments of the hermetic pipe penetration presented above can be combined arbitrarily, unless the description provided does not explicitly or logically indicate that such a combination is not possible.

### Industrial applicability

The practical application of the proposed solution is intended particularly as substitution of the current hermetic penetrations which have already started showing leakage, particularly in VVER and PWR type power plants which, after several years of operation, show volumetric crack-type defects occurring for a couple of physical reasons which, as a rule, cannot be excluded. Hermetic penetrations of similar designs can also be used in other technological systems where pipeline penetration through a building structure is required. The proposed hermetic penetration design increases the safety and lifetime of the penetration considerably as it does not contain any weld between the original head structure and the connected flow pipe stressed from the circumferential pressure of the medium, which was rendered inaccessible and, therefore, uncontrollable after being built in the structure. This eliminates the danger of occurrence of uncontrollable cracks in the current welded joints and also prevents any leaks of the medium. At the same time, this joint has been designed to transfer high force and moment effects with possibility to reduce rigidity in order to decrease the stresses caused by the pipeline connected up- and downstream the penetration.

### Reference numerals

- 1: Shaped collar
- 1a: Rigidity-creating part
- 1b: Connecting part
- 1c: Foot
- 2: Connecting joint (between the embeddable part and the shaped collar)
- 3: Connecting joint (between the connecting part and the flow part)
- 4: Inspection chamber
- 5: Flow part/flow pipe
- 6: Shaped collar
- 7: Insulation
- 8: Cooling internal means
- 9: Embeddable part
- 9a: Protecting tube
- 9b: Flange
- 10: Draught booster
- 11: Pulse tube
- 12: Pulse tube
- 13: Inspection chamber
- 14: Cooling air inlet
- 15: Cooling air outlet
- 16: Wall
- 17: Interconnection of inspection chambers
- 18: Pressurizing nozzle
- 19: Sliding bearing
- 100: Hermetic pipe penetration
- 101: Bellows

## Claims

1. Hermetic pipe penetration to pass media transported by a pipeline through a wall separating mutually hermetically separated building spaces; such hermetic pipe penetration comprises an embeddable part (9) and a flow part (5) and further comprises a shaped collar (1) provided for connecting the embeddable part (9) with the flow part (5), said shaped collar (1) comprising a rigidity-creating part (1a) and a connecting part (1b), the rigidity-creating part (1a) having a shape influencing the rigidity of the connection of the flow part (5) with the embeddable part (9) provided by the shaped collar (1) and influencing also a quantity of heat passing from the flow part (5) to the embeddable part (9);
wherein the connecting part (1b) of the shaped collar (1) is provided with a foot (1c), the foot (1c) is designed to be attached to the flow part (5) and connected with it by two first connecting joints (3);
the rigidity-creating part (1a) having an end provided for its attachment to the embeddable part (9) and to be connected with the embeddable part (9) by means of a second connecting joint (2),
wherein the foot (1c) is provided with a circumferential inspection chamber (4) arranged between the two first connecting joints (3) attaching the foot (1c) to the flow part (5) to monitor both first connecting joints (3) for leak-tightness.

2. Hermetic pipe penetration according to Claim 1, **characterized in that** the rigidity-creating part (1a) is provided above the foot (1c) and is perpendicular to the foot (1c), and **in that** the rigidity-creating part (1a) is arranged preferably symmetrically towards the foot (1c) for optimal compensation of thermal stresses.

3. Hermetic pipe penetration according to Claim 1 or 2, **characterized in that** the shaped collar (1) for a flow part (5) with medium temperature being higher than 60 °C has the rigidity-creating part (1a) containing at least two folds.

4. Hermetic pipe penetration according to at least one of Claims 1 to 3, **characterized in that** the circumferential inspection chamber (4) is provided with an outlet.

5. Hermetic pipe penetration according to Claim 4, **characterized in that** said outlet from the circumferential inspection chamber (4) is connected to a pulse tube (11) for periodical or continual monitoring of the connecting joints (3) for hermeticity or that said outlet is provided with a pressurizing nozzle (18) allowing to perform a pressure monitoring of the connecting joints (3) for their hermeticity.

6. Hermetic pipe penetration according to Claim 5, **characterized in that** the pulse tube (11) is provided with a pressure sensor to signal pressure increase in the chamber (4) to identify leakage.

7. Hermetic pipe penetration according to at least one of Claims 1 to 6, **characterized in that** a second inspection chamber (13) is circumferentially arranged above the second connecting joint (2) and is provided with a pulse tube (12) taken out for periodical or continual monitoring of the connecting joint (2) for hermeticity.

8. Hermetic pipe penetration according to at least one of Claims 1 to 7, **characterized in that** between the flow part (5) and the embeddable part (9) there is thermal insulation (7) at least partially installed to reduce heat transfer to the building structure.

9. Hermetic pipe penetration according to at least one of Claims 1 to 8, **characterized in that** between the flow part (5) and the embeddable part (9) cooling internal means (8) is installed to reduce heat transfer to the building structure.

10. Hermetic pipe penetration according to Claim 9, **characterized in that** the cooling internal means (8) is provided with a forced inlet of cooling air or with a passive inlet (14) of cooling air provided with a draught booster (10).

11. Hermetic pipe penetration according to at least one of Claims 1 to 10, **characterized in that** the shaped collar (1) has a thickness of all its parts within the range from 0.5 to 1.5 times the thickness of the flow part (5).

## Patentansprüche

1. Hermetische Rohrdurchführung zum Durchführen eines von einer Rohrleitung transportierten Mediums durch eine Wand, welche einander hermetisch getrennte Gebäudebereiche voneinander trennt, wobei die hermetische Rohrdurchführung einen einbettbaren Teil (9) und einen Strömungsteil (5) aufweist, ferner einen geformten Kragen (1) zur Verbindung des einbettbaren Teils (9) mit dem Strömungsteil (5) aufweist, wobei der geformte Kragen (1) ein Steifigkeitselement (1a) und einen Verbindungsteil (1b) aufweist, wobei das Steifigkeitselement (1a) eine Form zur Beeinflussung der Steifigkeit der durch den geformten Kragen (1) hergestellten Verbindung des Strömungsteils (5) mit dem einbettbaren Teil (9) sowie zur Beeinflussung der von dem Strömungsteil (5) auf den einbettbaren Teil (9) übertragenen Wärmemenge aufweist;
wobei an dem Verbindungsteil (1b) des geformten Kragens (1) ein Fuß (1c) vorgesehen ist, wobei der Fuß (1c) zur Befestigung an dem Strömungsteil (5) ausgebildet ist und durch zwei erste Verbindungselemente (3) mit diesem verbunden ist;
wobei das Steifigkeitselement (1a) an seinem Ende zur Befestigung an dem einbettbaren Teil (9) vorgesehen ist und durch ein zweites Verbindungselement (2) mit dem einbettbaren Teil (9) verbindbar ist, wobei an dem Fuß (1c) zwischen den beiden ersten Verbindungselementen (3), mit denen der Fuß (1c) an dem Strömungsteil (5) befestigt ist, eine umlaufende Kontrollkammer (4) zur Überwachung der Dichtheit der beiden ersten Verbindungselemente (3) angeordnet ist.

2. Hermetische Rohrdurchführung nach Anspruch 1, **dadurch gekennzeichnet, dass** das Steifigkeitselement (1a) oberhalb des Fußes (1c) angeordnet ist und senkrecht zu dem Fuß (1c) verläuft, und dass das Steifigkeitselement (1a) zur optimalen Kompensation thermischer Spannungen vorzugsweise symmetrisch zu dem Fuß (1c) angeordnet ist.

3. Hermetische Rohrdurchführung nach Anspruch 1 oder 2, **dadurch gekennzeichnet, dass** der geformte Kragen (1) für einen Strömungsteil (5) mit einer mittleren Temperatur von mehr als 60 °C das Steifigkeitselement (1a) mit wenigstens zwei Faltungen aufweist.

4. Hermetische Rohrdurchführung nach wenigstens einem der Ansprüche 1 bis 3, **dadurch gekennzeichnet, dass** die umlaufende Kontrollkammer (4) einen Auslass aufweist.

5. Hermetische Rohrdurchführung nach Anspruch 4, **dadurch gekennzeichnet, dass** der Auslass der umlaufenden Kontrollkammer (4) mit einem Pulsschlauch (11) zur periodischen oder kontinuierlichen Überwachung der Verbindungselemente (3) auf Hermetizität verbunden ist, oder dass der Auslass eine Druckdüse (18) zur Druckprüfung der Verbindungselemente (3) auf Hermetizität aufweist.

6. Hermetische Rohrdurchführung nach Anspruch 5, **dadurch gekennzeichnet, dass** der Pulsschlauch (11) einen Drucksensor zur Erkennung eines Lecks durch einen Druckanstieg in der Kammer (4) aufweist.

7. Hermetische Rohrdurchführung nach wenigstens einem der Ansprüche 1 bis 6, **dadurch gekennzeichnet, dass** eine zweite Kontrollkammer (13) oberhalb des zweiten Verbindungselementes (2) umlaufend angeordnet ist und einen herausgeführten Pulsschlauch (12) zur periodischen oder kontinuierlichen Überwachung des Verbindungselementes (2) auf Hermetizität aufweist.

8. Hermetische Rohrdurchführung nach wenigstens einem der Ansprüche 1 bis 7, **dadurch gekennzeichnet, dass** zur Reduzierung eines Wärmeeintrags in die Gebäudestruktur zwischen dem Strömungsteil (5) und dem einbettbaren Teil (9) zumindest teilweise eine Wärmedämmung (7) angeordnet ist

9. Hermetische Rohrdurchführung nach einem der Ansprüche 1 bis 8, **dadurch gekennzeichnet, dass** zur Reduzierung eines Wärmeeintrags in die Gebäudestruktur zwischen dem Strömungsteil (5) und dem einbettbaren Teil (9) ein internes Kühlmittel (8) angeordnet sind.

10. Hermetische Rohrdurchführung nach Anspruch 9, **dadurch gekennzeichnet, dass** das interne Kühlmittel (8) einen erzwungenen Kühllufteinlass oder einen passiven Kühllufteinlass (14) mit einem Förderdruckverstärker (10) aufweist.

11. Hermetische Rohrdurchführung nach wenigstens einem der Ansprüche 1 bis 10, **dadurch gekennzeichnet, dass** alle Teile des geformten Kragens (1) eine Dicke im Bereich der 0,5- bis 1,5-fachen Dicke des Strömungsteils (5) aufweisen.

## Revendications

1. Pénétration de tuyau hermétique pour faire passer des milieux transportés par une canalisation à travers une paroi séparant des espaces de construction mutuellement séparés de manière hermétique ; une telle pénétration de tuyau hermétique comprenant une partie encastrable (9) et une partie d'écoulement (5) et comprenant en outre un collier façonné (1) disposé pour relier la partie encastrable (9) à la partie d'écoulement (5), ledit collier façonné (1) comprenant une partie créatrice de rigidité (1a) et une partie de liaison (1b), la partie créatrice de rigidité (1a) ayant une forme influençant la rigidité de la liaison de la partie d'écoulement (5) à la partie encastrable (9) fournie par le collier façonné (1) et influençant également une quantité de chaleur passant de la partie d'écoulement (5) à la partie encastrable (9) ;
dans laquelle la partie de liaison (1b) du collier façonné (1) comporte un pied (1c), le pied (1c) étant conçu pour être fixé à la partie d'écoulement (5) et relié à celle-ci par deux premiers joints de liaison (3) ;
la partie créatrice de rigidité (1a) ayant une extrémité disposée pour sa fixation à la partie encastrable (9) et pour être reliée à la partie encastrable (9) au moyen d'un second joint de liaison (2),
dans laquelle le pied (1c) comporte une chambre d'inspection périphérique (4) disposée entre les deux premiers joints de liaison (3) attachant le pied (1c) à la partie d'écoulement (5) afin de surveiller les deux premiers joints de liaison (3) pour l'étanchéité.

2. Pénétration de tuyau hermétique selon la revendication 1, **caractérisée par le fait que** la partie créatrice de rigidité (1a) est disposée au-dessus du pied (1c) et est perpendiculaire au pied (1c), et **par le fait que** la partie créatrice de rigidité (1a) est disposée de préférence symétriquement vers le pied (1c) pour une compensation optimale des contraintes thermiques.

3. Pénétration de tuyau hermétique selon la revendication 1 ou 2, **caractérisée par le fait que** le collier façonné (1) pour une partie d'écoulement (5) avec une température de milieu supérieure à 60 °C a la partie créatrice de rigidité (1a) contenant au moins deux plis.

4. Pénétration de tuyau hermétique selon au moins l'une des revendications 1 à 3, **caractérisée par le fait que** la chambre d'inspection périphérique (4) comporte une sortie.

5. Pénétration de tuyau hermétique selon la revendication 4, **caractérisée par le fait que** ladite sortie de la chambre d'inspection périphérique (4) est reliée à un tube à impulsions (11) pour une surveillance périodique ou continue des joints de liaison (3) pour l'herméticité ou que ladite sortie comporte une buse de pressurisation (18) permettant d'effectuer une surveillance de pression des joints de liaison (3) pour leur herméticité.

6. Pénétration de tuyau hermétique selon la revendication 5, **caractérisée par le fait que** le tube à impulsions (11) comporte un capteur de pression pour signaler une augmentation de pression dans la chambre (4) afin d'identifier une fuite.

7. Pénétration de tuyau hermétique selon au moins l'une des revendications 1 à 6, **caractérisée par le fait qu'**une seconde chambre d'inspection (13) est disposée de façon périphérique au-dessus du second joint de liaison (2) et comporte un tube à impulsions (12) sorti pour une surveillance périodique ou continue du joint de liaison (2) pour l'herméticité.

8. Pénétration de tuyau hermétique selon au moins l'une des revendications 1 à 7, **caractérisée par le fait qu'**entre la partie d'écoulement (5) et la partie encastrable (9), il y a une isolation thermique (7) au moins partiellement installée pour réduire un transfert de chaleur vers la structure de bâtiment.

9. Pénétration de tuyau hermétique selon au moins l'une des revendications 1 à 8, **caractérisée par le fait qu'**entre la partie d'écoulement (5) et la partie encastrable (9), un moyen interne de refroidissement (8) est installé pour réduire un transfert de chaleur vers la structure de bâtiment.

10. Pénétration de tuyau hermétique selon la revendication 9, **caractérisée par le fait que** le moyen interne de refroidissement (8) comporte une entrée forcée d'air de refroidissement ou une entrée passive (14) d'air de refroidissement comportant un amplificateur de tirage (10).

11. Pénétration de tuyau hermétique selon au moins l'une des revendications 1 à 10, **caractérisée par le fait que** le collier façonné (1) a une épaisseur de toutes ses parties se situant dans la plage de 0,5 et 1,5 fois l'épaisseur de la partie d'écoulement (5).
